# NEUE EUROPÄISCHE PATENTSCHRIFT

(11) **EP 1 574 745 B2**
(45) Veröffentlichungstag und Bekanntmachung des Hinweises auf die Entscheidung über den Einspruch: **23.11.2011**
(45) Hinweis auf die Patenterteilung: 03.05.2006
(21) Anmeldenummer: 05005229.9
(22) Anmeldetag: 10.03.2005
(51) Int. Cl.: F16F 15/131

(54) **Torsionsschwingungsdämpfer**
Torsional vibration damper
Amortisseur de vibrations de torsion

(30) Priorität: 13.03.2004 DE 102004012425
(43) Veröffentlichungstag der Anmeldung: 14.09.2005
(73) Patentinhaber: ZF Friedrichshafen AG, 88046 Friedrichshafen (DE)
(72) Erfinder: Kleifges, Jürgen, 97422 Schweinfurt (DE); Schierling, Bernhard, 97273 Kürnach (DE)
(74) Vertreter: Ruttensperger, Bernhard

(56) Entgegenhaltungen:
- DE-A1- 4 311 908
- DE-A1- 4 340 175
- DE-A1- 10 004 125
- US-A- 6 138 806

## Beschreibung

Die vorliegende Erfindung betrifft einen Torsionsschwingungsdämpfer gemäß dem Oberbegriff des Anspruches 1.

Durch die DE 100 04 125 A1 ist ein Torsionsschwingungsdämpfer bekannt, der über ein antriebsseitiges Übertragungselement und über ein gegenüber demselben drehauslenkbares abtriebsseitiges Übertragungselement verfügt. Das Letztgenannte ist mehrteilig ausgebildet und weist außer einer eine Zentrierung des abtriebsseitigen Übertragungselementes gegenüber dem antriebsseitigen Übertragungselement bewirkenden Nabenscheibe auch ein daran befestigtes Schwungmassenelement auf, über welches eine Reibungskupplung aufgenommen werden kann. Derartige Reibungskupplungen enthalten in üblicher Weise eine Kupplungsscheibe, die beidseits mit Reibbelägen ausgebildet ist, von denen der dem Schwungmassenelement benachbarte Reibbelag an einer hierfür vorgesehenen Reibfläche des Schwungmassenelementes in Anlage bringbar ist.

Das Schwungmassenelement selbst besteht bei der bekannten Anordnung aus Stahlblech und ist dadurch gegenüber ansonsten üblichen Gussausführungen vorzüglich umformbar. Allerdings besteht auch bei aus Stahlblech bestehenden Schwungmassenelementen das Problem einer unbefriedigenden Oberflächengüte.

Dem kann zwar durch Nachbearbeitung, insbesondere an den Verbindungsflächen zur Nabenscheibe einerseits und zur Reibungskupplung sowie zur Reibfläche für den Reibbelag der Kupplungsscheibe andererseits abgeholfen werden, jedoch handelt es sich bei derartigen Nachbearbeitungen im Wesentlichen um spanabhebende Fertigungsvorgänge, die eine beträchtliche Mehrbelastung an Kosten für die Herstellung des Schwungmassenelementes verursachen.

Die DE-A-1 425 358 offenbart einen hydrodynamischen Drehmomentwandler mit einer in dessen Gehäuse vorgesehenen Überbrückungskupplung. Diese Überbrückungskupplung umfasst einen unter Federvorspannung stehenden Kupplungskolben, welcher eine erste Reibfläche für die Reibbeläge einer Kupplungsscheibe der Überbrückungskupplung aufweist. Ein mit dem Turbinenrad und über dieses mit einer Abtriebswelle drehfest gekoppeltes Widerlagerelement stellt eine zweite Reibfläche bereit für die Reibbeläge der Kupplungsscheibe. Diese zweite Reibfläche ist im Bereich einer Einsenkung im Widerlagerelement gebildet, welche so geformt ist; dass bei axial unbelasteter Kupplungsscheibe der Abstand der Reibfläche zum zugeordneten Reibbelag der Kupplungsscheibe von radial außen nach radial innen abnimmt.

Der Erfindung liegt die Aufgabe zugrunde, ein Bauteil eines Torsionsschwingungsdämpfers, insbesondere ein Schwungmassenelement, so auszubilden, dass dieses mit geringstmögiichem Fertigungs- und Kostenaufwand herstellbar ist.

Diese Aufgabe wird durch einen Torsionsschwingungsdämpfer gemäß Anspruch 1 gelöst.

Durch Verwendung einer Stahlblechtafel als Ausgangsbasis für ein Schwungmassenelement des abtriebsseitigen Übertragungselementes wird auf ein Grundmaterial zurückgegriffen, dessen durch eine Walzhaut gebildete Oberfläche bereits mit einer Oberflächengüte, insbesondere im Hinblick auf Eben- und Glattflächigkeit überzeugt, die eine Nachbearbeitung des Schwungmassenelements entbehrlich macht, insbesondere an Stellen, an denen eine Verbindung mit anderen Bauteilen herzustellen ist, wie mit einer Nabenscheibe des abtriebsseitigen Übertragungselementes oder mit einer Reibungskupplung, oder aber eine Wirkverbindung, wie mit dem jeweils benachbarten Reibbelag einer Kupplungsscheibe der Reibungskupplung. Handelsübliche Stahlblechtafeln verfügen neben ihrer hohen Oberflächengüte auch über eine im Wesentlichen gleichmäßige Dicke. Zugunsten guter Umformbarkeit sind hierbei insbesondere Stahlblechtafeln aus einem Werkstoff mit vorzüglichen Umformungseigenschaften, wie STW 24, QSTE oder Aluminium, zu verwenden. Durch Verzicht insbesondere auf spanabhebende Nachbearbeitungsvorgänge besteht die Möglichkeit einer erheblichen fertigungstechnischen Vereinfachung und damit einer deutlichen Kostenreduzierung gegenüber einer Gussausführung des Schwungmassenelements.

Das im Wesentlichen ringförmige Schwungmassenelement entsteht als Heraustrennung, insbesondere als Stanzteil, aus der Stahlblechtafel. Gegebenenfalls kann das Schwungmassenelement bei diesem Stanzvorgang auch einem gleichzeitigen oder anschließenden Umformvorgang unterworfen sein, um eine eventuell gewünschte Profilierung zu erzeugen. Bei einem derartigen Umformvorgang handelt es sich um einen kostengünstigen Fertigungsvorgang, der neben geometrischen Erfordernissen des Schwungmassenelements auch eine Versteifung derselben sowie die Erzeugung einer besseren Funktionalität sowie eine nochmals höhere Oberflächengüte herbeiführen kann.

Die Funktionalität ist durch konkave Ausbildung einer Reibfläche des Schwungmassenelementes erhöht, indem diese zur Anlagerung des benachbarten Reibbelages der Kupplungsscheibe im Querschnitt mit leicht konkaver Ausbildung gestaltet ist, wobei die durch die konkave Ausbildung erzielte axiale Rücknahme des Schwungmassenelementes an der Reibfläche in der Größenordnung von 0,05 mm bis 0,5 mm liegen kann. Aufgrund dieser Umformung am Schwungmassenelement ist der beim Einrückvorgang, also bei axialer Annäherung des Reibbelages der Kupplungsscheibe an die Reibfläche des Schwungmassenelementes, zunächst wirksame Reibradius nach radial außen verlagerbar und vergrößert dadurch die Drehmomentübertragungsfähigkeit der Reibungskupplung.

Im Folgenden wird ein bevorzugtes Ausführungsbeispiel der Erfindung anhand der beiliegenden Figuren erläutert. Es zeigt:
- Fig. 1: einen Torsionsschwingungsdämpfer mit einem antriebsseitigen Übertragungselement und einem eine Reibungskupplung aufnehmenden, abtriebsseitigen Übertragungselement;
- Fig. 2: eine Herauszeichnung des abtriebsseitigen Übertragungselementes, aufweisend eine Nabenscheibe und ein damit verbundenes Schwungmassenelement;
- Fig. 3: eine Herauszeichnung des Schwungmassenelementes in nochmals vergrößerter Darstellung mit einer konkaven axialen Rücknahme im Bereich einer Reibfläche des Schwungmassenelementes;
- Fig. 4: das Schwungmassenelement vor einem Herausstanzen aus einer Stahlblechtafel.

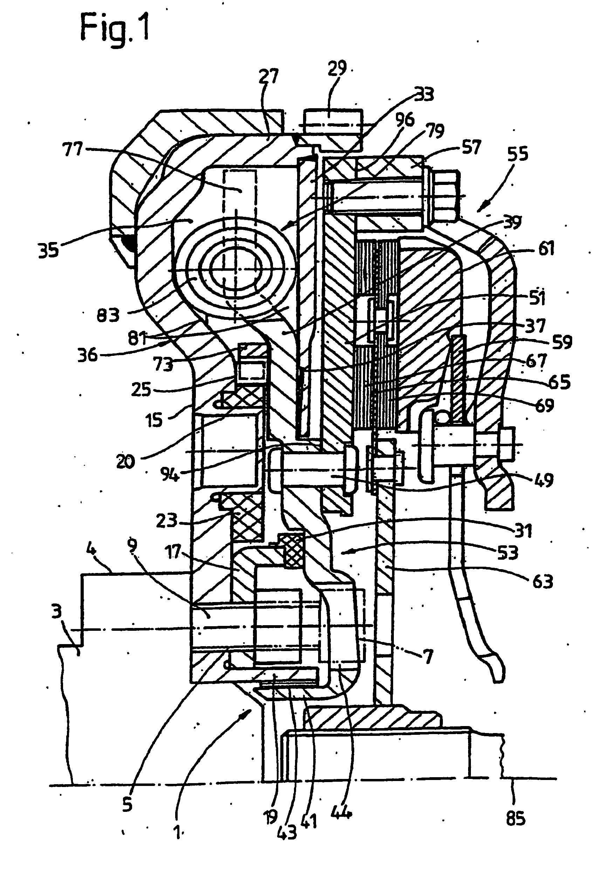

In Fig. 1 ist ein um eine Drehachse 85 drehbarer Torsionsschwingungsdämpfer dargestellt, der an einem Antrieb 1, wie beispielsweise einer Kurbelwelle 3 einer Brennkraftmaschine aufgenommen ist. Hierzu weist die Kurbelwelle 3 an ihrem freien Ende einen Flansch 4 auf, der mit Gewindebohrungen 5 ausgebildet ist, die zur Aufnahme von Befestigungsmitteln 7 in Form von Schrauben 9 vorgesehen sind, deren Schaft jeweils in eine der Gewindebohrungen 5 einführbar ist. Der Schaft jeder Schraube 9 durchgreift weiterhin Durchgänge eines sich im wesentlichen nach radial außen erstreckenden Primärtfansches 15, der Teil eines antriebsseitigen Übertragungselementes 36 ist, sowie einer Anlagescheibe 17, die axial zwischen dem Kopf der Schraube 9 und dem Primärflansch 15 eingespannt ist. Der Primärflansch 15 weist radial innen eine Primärnabe 19 auf, die sich in einer von der Kurbelwelle 3 abgewandten Richtung erstreckt. Im radial mittleren Bereich ist der Primärflansch 15 mit einer Lagerausdrückung 20 versehen, die ein Planetenrad 23 eines Planetengetriebes 25 drehbar aufnimmt. Im radial äußeren Bereich geht der Primärflansch 15 in eine sich im viesentlichen axial erstreckende Ringwand 27 über, die radial außen einen Zahnkranz 29 trägt, der mit einem nicht gezeigten Anlasserritzel in Drehverbindung bringbar ist. Diese Ringwand 27 dient zur Aufnahme einer nach radial innen laufenden Dichtungswand 33, die zusammen mit der Ringwand 27 und dem Primärflansch 15 eine Fettkammer 35 umschließt, die zumindest teilweise mit viskosem Medium befüllt und Teil des antriebsseitigen Übertragungselementes 36 ist. Zur Abdichtung dieser Fettkammer 35 ist an der Dichtungswand 33 eine Axialeindrückung 37 vorgesehen, die bis auf Spaltbreite an den zugeordneten. Bereich einer Nabenscheibe 39 herangeführt ist, die im radial inneren Bereich eine auf die Kurbelwelle 3 zu gerichtete Sekundämabe 41 aufweist.

Radial zwischen der bereits erwähnten Primärnabe 19 des Primärflansches 15 und der Sekundämabe 41 der Nabenscheibe 39 ist eine Radiallagerung 43 vorgesehen, die im vorliegenden Fall als Gleitlagerung ausgebildet ist. Radial außerhalb der Sekundärnabe 41 ist die Nabenscheibe 39 mit einer Durchgangsöffnung 44 zum Durchstecken der Befestigungsmittel 7 ausgebildet. Außerdem wird der Äxialabstand der Nabenscheibe 39 gegenüber dem Primärflansch 15 über eine Axiallagerung 31 eingestellt, die axial zwischen der Anlagescheibe 17 und der Nabenscheibe 39 gehalten ist. Noch weiter radial außen ist eine Vernietung 49 vorgesehen, durch welche eine Verbindung der Nabenscheibe 39 zu einem abtriebsseitigen Schwungmassenelement 51 hergestellt wird, das ebenso wie die Nabenscheibe 39 als abtriebsseitiges Übertragungselement 53 wirksam ist und in an sich bekannter Weise zur Aufnahme einer Reibungskupplung 55 dient, die in einem Kupplungsgehäuse 57 eine Membranfeder 59 und eine Anpressplatte 61 sowie eine durch dieselben beaufschlagbare Kupplungsscheibe 63 mit beidseits eines Trägers 65 derselben aufgenommenen Reibbelägen 67, 69 aufnimmt.

Zurückkommend auf die Nabenscheibe 39 weist diese radial außerhalb der Vernietung 49 eine Innenverzahnung 73 auf, mit welcher sie in Eingriff mit der Verzahnung des zuvor bereits erwähnten Planetenrades 23 steht. Die Nabenscheibe 39 ist demnach als Hohlrad 75 des Planetengetriebes 25 wirksam.

Am Umfangsbereich der Nabenscheibe 39 sind abtriebsseitige Ansteuerelemente 77 einer mit Federn 83 versehenen Dämpfungseinrichtung 79 angeformt. Ein entsprechendes antriebsseitiges Ansteuerelement 81 ist am Primärflansch 15 und ein weiteres an der Dichtungswand 33 befestigt, und zwar jeweils an der Fettkammerseite des entsprechenden Elementes.

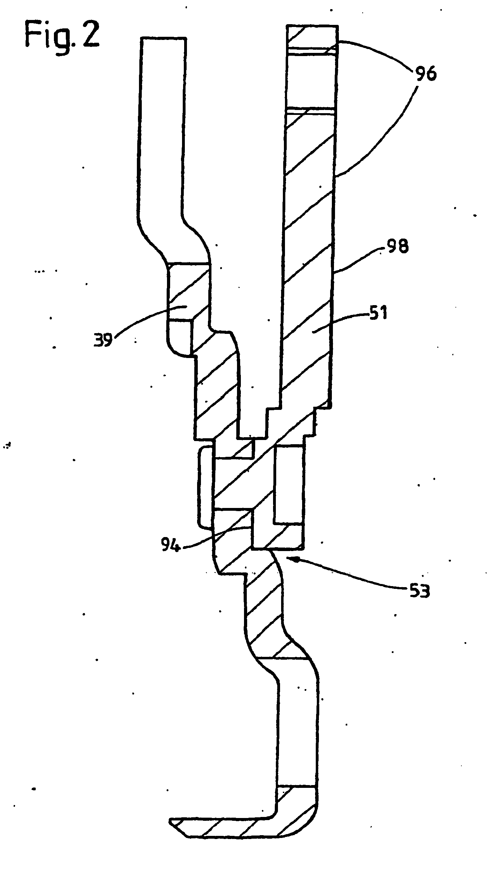

Fig. 2 zeigt eine Herauszeichnung des abtriebsseitigen Übertragungselementes 53, bestehend aus der Nabenscheibe 39 und dem Schwungmassenelement 51. Das Letztgenannte soll aus einem optimal urnformbaren Stahlblech, wie beispielsweise STW 24 oder aus Aluminiumblech bestehen. Zur Anbindung an die Nabenscheibe 39 soll eine erste Verbindungsfläche 94 an der der Nabenscheibe 39 zugewandten Seite des Schwungmassenelementes 51 vorgesehen sein, während zweite Verbindungsflächen 96 zum einen an derjenigen Stelle des Schwungmassenelementes 51 vorgesehen sind, die zur Aufnahme des Kupplungsgehäuses 57 der Reibungskupplung 55 dient, während die andere Stelle der zweiten Verbindungsfläche 96 im radialen Erstreckungsbereich einer Reibfläche 98 für den benachbarten Reibbelag 67 der Kupplungsscheibe 63 vorgesehen ist.

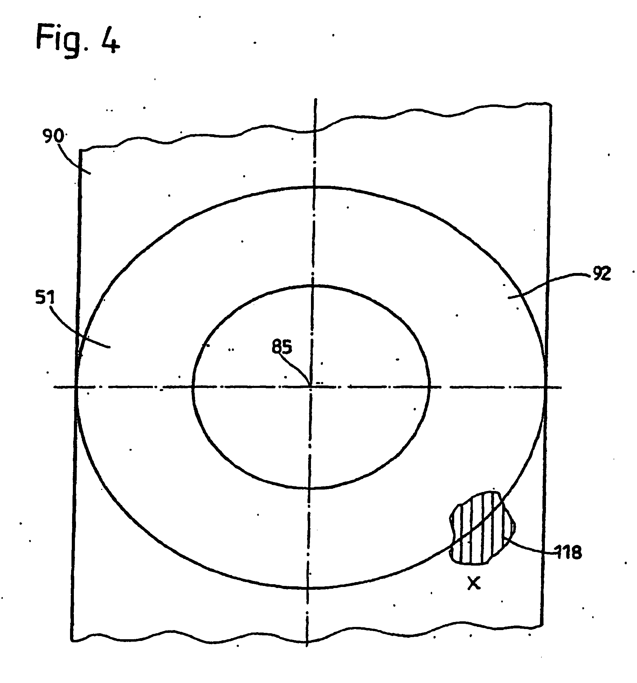

Um zumindest diese Verbindungsflächen 94, 96, besser noch alle Bereiche des Schwungmassenelementes 51, mit der gewünschten Oberflächengüte ausbilden zu können, ohne hierfür eine spanabhebende Nachbearbeitung durchführen zu müssen, wird als Ausgangsmaterial zur Herstellung des Schwungmassenelementes 51 eine Stahlblechtafel 90 verwendet, die bereits ab Werk mit einer vergleichsweise hohen Oberflächengüte bereitgestellt werden kann. Derartige Stahlblechtafeln 90 verfügen zudem, da sie durch ein Walzverfahren hergestellt werden, über einen ausgerichteten Faserverlauf 118, der durch ein geöffnetes Materialfenster X in Fig. 4 zur Darstellung gebracht werden soll. Üblicherweise ist dieser Faserverlauf mit im Wesentlichen parallel zueinander ausgerichteten Fasern aufgebaut.

Wie Fig. 4 weiterhin zeigt, entsteht das Schwungmassenelement 51 als Heraustrennung 92 aus der Stahlblechtafel 90, wobei die Heraustrennung 92 mittels eines Stanzvorganges erfolgen kann. Diesem kann ein Umformvorgang überlagert oder angeschlossen sein, um an dem mittels des Stanzvorganges gegenüber der Stahlblechtafel 90 freigestellten Schwungmassenelement 51 eine eventuell gewünschte Profilierung auszubilden. Sowohl bei dem Stanzvorgang als auch bei dem Umformvorgang handelt es sich um vergleichsweise kostengünstige Fertigungsvorgänge, während aufgrund der der Stahlblechtafel 90 bereits zuvor anhaftenden hohen Oberflächengüte eine kostenaufwändige spanabhebende Nachbearbeitung entbehrlich ist, sowohl beim Schwungmassenelement 51 insgesamt als auch an den Verbindungsflächen 94, 96 im Besonderen.

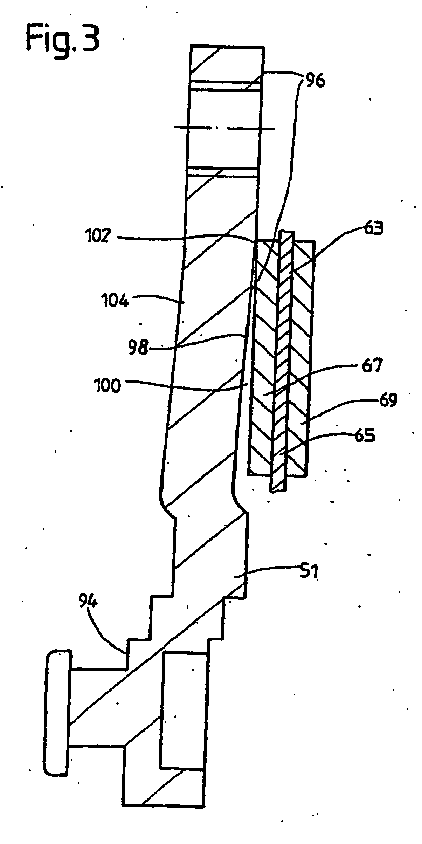

Eine erfindungswesentliche Maßnahme ist in Fig. 3 zeichnerisch dargestellt, wonach die Reibfläche 98 des Schwungmassenelementes 51 mit einer im Wesentlichen konkav ausgebildeten Rücknahme 100 gegenüber der sonstigen Reibfläche 98 versehen ist, und zwar ausgehend von einem Reibflächen-Außendurchmesser 102. Der Sinn einer derartigen Rücknahme 100 in der Reibfläche 98 liegt darin, bei noch nicht vollständig hergestellter Reibverbindung zwischen der Reibfläche 98 und dem benachbarten Reibbelag 67 der Kupplungsscheibe 63 einen definierten Erstanlageradius bereit zu stellen, der sich im radial äußeren Bereich der Reibfläche 98 befindet und dadurch als großer Reibradius wirksam ist, mit dem eine vergleichsweise sichere Momentenübertragung durch die Reibungskupplung 55 gewährleistet ist. Auch die Rücknahme 100 der Reibfläche 98 kann mittels eines Umformvorganges und daher ohne spanabhebende Nachbearbeitung hergestellt werden.

### Bezugszeichenliste

- 1.: Antrieb
- 3.: Kurbelwelle
- 4.: Flansch
- 5.: Gewindebohrungen
- 7.: Befestigungsmittel
- 9.: Schrauben
- 15.: Primärflansch
- 17.: Anlegescheibe
- 19-: Primärnabe
- 20.: Lagerausdrückung
- 23.: Planetenrad
- 25.: Plantetengetriebe
- 27.: Ringwand
- 29.: Zahnkranz
- 31.: Axiallagerung
- 33.: Dichtungswand
- 35.: Fettkammer
- 36.: antriebss. Übertragungselement
- 37.: Axialeindrückung
- 39.: Nabenscheibe
- 41.: Sekundärnabe
- 43.: Radiallagerung
- 44.: Durchgangsöffnung
- 49.: Vernietung
- 51.: Schwungmassenelement
- 53.: abtriebss. Übertragungselement
- 55.: Reibungskupplung
- 57.: Kupplungsgehäuse
- 59.: Membranfeder
- 61.: Anpressplatte
- 63.: Kupplungsscheibe
- 65.: Träger
- 67,69: Reibbeläge
- 73.: Innenverzahnung
- 75.: Hohlrad
- 77.: Ansteuerelemente abtriebsseitig
- 79.: Dämpfungseinrichtung
- 81.: Ansteuerelemente antriebsseitig
- 83.: Federn
- 85.: Mittenachse
- 90.: Stahlblechtafel
- 92.: Heraustrennung
- 94,96: Verbindungsflächen
- 98.: Reibfläche
- 100.: Rücknahme
- 102.: Reibflächen-Außendurchmesser
- 104.: Rückseite

## Patentansprüche

1. Torsionsschwingungsdämpfer mit einem antriebsseitigen Übertragunselement, das über eine In Umfangsrichtung wirksame Dämpfungseinrichtung (79) mit einem relativ zum antriebsseitigen Übertragungselement (36) drehauslenkbaren abtriebsseitigen Übertragungselement (53) verbunden ist, wobei zumindestdas letztgenannte überein aus einem umformbaren Stahlblech bestehendes Schwungmassenelement (51) verfügt, das über wenigstens eine erste Verbindungsfläche (94) mit einer eine Zentrierung des abtriebsseitigen Übertragungselementes gegenüber dem antriebsseitigen Übertragungselement bewirkenden Nabenscheibe (39) drehfest verbunden ist, und über zumindest eine zweite Verbindungsfläche (96) eine Reibungskupplung (55) aufnimmt sowie eine Reibfläche für einen Reibbelag einer Kupplungsscheibe (63) der Reibungskupplung bereit stellt,
**dadurch gekennzeichnet,**
**dass** das Schwungmassenelement (51) als Heraustrennung (92) aus einer Stahlblechtafel (90) gebildet ist und im Wesentlichen über die gleiche Oberflächengüte wie die Stahlblechtafel (90) verfügt, wobei aufgrund dieser Oberflächengüte selbst an den Verbindungsflächen (94, 96) des Schwungmassenelementes (51) Entbehrlichkeit für eine Nachbearbeitung vorliegt, und
**dass** das Schwungmassenelement (51) an seiner Reibfläche (98) im Querschnitt in im Wesentlichen radialer Erstreckungsrichtung über einen konkaven Verlauf verfügt, wobei dieser eine Rücknahme (100) im radialen Erstreckungsbereich der Reibfläche (98) radial innerhalb des Reibflächen - Außendurchmessers (102) zur Folge hat.

2. Torsionsschwingungsdämpfer nach Anspruch 1,
**dadurch gekennzeichnet,**
**dass** die Heraustrennung (92) des Schwungmassenelementes (51) aus der Stahlblechtafel (90) mittels eines Stanzvorganges herstellbar ist.

3. Torsionsschwingungsdämpfer nach Anspruch 2,
**dadurch gekennzeichnet,**
**dass** die Heraustrennung (92) durch einen mit dem Stanzvorgang kombinierbaren Umformvorgang plastisch verformbar ist.

4. Torsionsschwingungsdämpfer nach einem der Ansprüche 1-3,
**dadurch gekennzeichnet,**
**dass** die Rücknahme (100) an der Reibfläche (98) in der Größenordnung unterhalb von 0,5 mm liegt.

## Claims

1. Torsional vibration damper having a driving transmission element which is connected, by means of a damping device (79) which acts in the circumferential direction, to a driven transmission element (53) which can move rotationally relative to the driving transmission element (36), at least the driven transmission element (53) having a centrifugal mass element (51) which is composed of a deformable sheet steel plate, is connected in a rotationally fixed manner by means of at least one first connecting face (94) to a hub disc (39), said hub disc (39) centring the driven transmission element relative to the driving transmission element, holds a friction clutch (55) by means of at least one second connecting face (96), and provides a friction face for a friction lining of a clutch disc (63) of the friction clutch,
**characterized**
**in that** the centrifugal mass element (51) is formed as a cut-out portion (92) from a steel sheet (90) and has substantially the same surface quality as the steel sheet (90), it being possible on account of said surface quality to dispense with remachining even at the connecting faces (94, 96) of the centrifugal mass element (51), and
**in that** in a substantially radial direction of extent, the friction face (98) of the centrifugal mass element (51) has a concave cross-sectional profile, which gives rise to a retraction (100) in the region of radial extent of the friction face (98) radially inward from the friction face outer diameter (102).

2. Torsional vibration damper according to Claim 1,
**characterized**
**in that** the cut-out portion (92) of the centrifugal mass element (51) can be produced from the steel sheet (90) by means of a punching process.

3. Torsional vibration damper according to Claim 2,
**characterized**
**in that** the cut-out portion (92) can be plastically deformed by means of a forming process which can be combined with the punching process.

4. Torsional vibration damper according to one of Claims 1 to 3,
**characterized**
**in that** the retraction (100) of the friction face (98) is of an order of magnitude of less than 0.5 mm.

## Revendications

1. Amortisseur de vibrations de torsion comprenant un élément de transmission côté moteur, lequel est relié par le biais d'un dispositif d'amortissement (79) agissant dans le sens du pourtour avec un élément de transmission (53) côté sortie pouvant être dévié par rotation par rapport à l'élément de transmission (36) côté moteur, au moins l'élément de transmission (53) côté sortie disposant d'un élément de masse d'inertie (51) composé de tôle d'acier déformable, lequel est relié de manière à ne pas pouvoir tourner par le biais d'au moins une surface de liaison (94) avec un disque de moyeu (39) réalisant un centrage de l'élément de transmission côté sortie par rapport à l'élément de transmission côté moteur, et par le biais d'au moins une deuxième surface de liaison (96) absorbe un couple de friction (55) tout en fournissant une surface de friction pour une garniture de friction d'un disque d'embrayage (63) de l'embrayage à friction, **caractérisé en ce que** l'élément de masse d'inertie (51) est réalisé sous la forme d'une découpe (92) dans un panneau en tôle d'acier (90) et dispose pour l'essentiel de la même qualité de surface que le panneau en tôle d'acier (90), cette qualité de surface même au niveau des surfaces de liaison (94, 96) de l'élément de masse d'inertie (51) rendant un réusinage inutile, et **en ce que** l'élément de masse d'inertie (51) dispose sur sa surface de friction (98) en section transversale dans un sens d'extension essentiellement radial d'un tracé concave, celui-ci ayant pour conséquence un retrait (100) dans la zone d'extension radiale de la surface de friction (98) dans le sens radial à l'intérieur du diamètre extérieur des surfaces de friction (102).

2. Amortisseur de vibrations de torsion selon la revendication 1, **caractérisé en ce que** la découpe (92) de l'élément de masse d'inertie (51) dans le panneau en tôle d'acier (90) peut être réalisée au moyen d'une opération d'estampage.

3. Amortisseur de vibrations de torsion selon la revendication 2, **caractérisé en ce que** la découpe (92) peut être façonnée de manière élastique par une opération de déformation pouvant être combinée avec l'opération d'estampage.

4. Amortisseur de vibrations de torsion selon l'une revendications 1 à 3, **caractérisé en ce que** le retrait (100) sur la surface de friction (98) est dans un ordre de grandeur inférieur à 0,5 mm.
